# EUROPEAN PATENT SPECIFICATION

(11) **EP 4 579 875 B1**
(45) Date of publication and mention of the grant of the patent: **05.08.2026**
(21) Application number: 22960422.8
(22) Date of filing: 30.09.2022
(51) Int. Cl.: H01M 10/613, F28F 1/02, F28D 1/053, H01M 10/6557, F28F 9/02

(54) **FLOW COLLECTOR, THERMAL MANAGEMENT ASSEMBLY, BATTERY, AND ELECTRICAL APPARATUS**
STRÖMUNGSKOLLEKTOR, WÄRMEVERWALTUNGSANORDNUNG, BATTERIE UND ELEKTRISCHE VORRICHTUNG
COLLECTEUR D'ÉCOULEMENT, ENSEMBLE DE GESTION THERMIQUE, BATTERIE ET APPAREIL ÉLECTRIQUE

(43) Date of publication of application: 02.07.2025
(73) Proprietor: CONTEMPORARY AMPEREX TECHNOLOGY (HONG KONG) LIMITED, Central (HK)
(72) Inventor: SONG, Feiting, Ningde, Fujian 352100 (CN); HOU, Yuepan, Ningde, Fujian 352100 (CN); HUANG, Xiaoteng, Ningde, Fujian 352100 (CN); CHEN, Zhiming, Ningde, Fujian 352100 (CN)
(74) Representative: Gong, Jinping
(86) International application number: PCT/CN2022/123599
(87) International publication number: WO 2024/065814

(56) References cited:
- CN-A- 109 786 887
- CN-A- 110 970 681
- CN-A- 112 055 898
- CN-A- 114 665 188
- CN-U- 216 903 116
- CN-U- 217 158 327

## Description

### TECHNICAL FIELD

This application relates to the field of battery technologies, and more specifically, to a fluid collector, a thermal management assembly, a battery, and an electric apparatus.

### BACKGROUND

Battery cells are widely used in electronic devices such as mobile phones, notebook computers, electric bicycles, electric vehicles, electric aircrafts, electric ships, electric toy cars, electric toy ships, electric toy aircrafts, and electric tools.

In the development of battery technologies, how to reduce the risk of thermal runaway in batteries is a research direction in battery technologies.

CN114665188A describes a water cooling plate assembly, a water cooling system, a battery, a battery box and an electrical device.

### SUMMARY

This application provides a fluid collector, a thermal management assembly, a battery, and an electric apparatus, which can reduce the risk of thermal runaway in the battery.

According to a first aspect, an embodiment of this application provides a fluid collector as defined in claim 1 that is applied
to a thermal management assembly of a battery and includes a housing and a separation portion. The housing has a fluid collecting chamber, where the fluid collecting chamber is configured to be connected to a plurality of heat exchange channels in the thermal management assembly. The separation portion is disposed in the fluid collecting chamber. The fluid collecting chamber includes a plurality of concave cavities. The separation portion separates the plurality of concave cavities. Each of the concave cavities is configured to communicate with at least one of the heat exchange channels. The housing and the separation portion form an integrated structure.

The separation portion is provided on the housing to partition the fluid collecting chamber into the plurality of concave cavities. The plurality of heat exchange channels are connected in series and communicate with each other through the plurality of concave cavities. This can alleviate non-uniform heating of a battery cell caused by provision of a single cavity in a fluid collector, enhancing the heat exchange effect of the battery cell and reducing the risk of thermal runaway in the battery.

The integration can not only significantly improve structural strength of a junction, but also significantly enhance airtightness of the junction between the separation portion and the housing. This reduces the risk of cross-flow between adjacent concave cavities and mitigates temperature rise or fall caused by mixing of heat exchange fluid, enhancing the heat exchange effect of the battery cell, and reducing the risk of thermal runaway in the battery.

In some embodiments, the fluid collecting chamber includes an accommodation recess. The accommodation recess is recessed from one end of the housing facing the heat exchange channel. The plurality of concave cavities are recessed from a bottom surface of the accommodation recess towards a side facing away from the accommodation recess.

The bottom surface of the accommodation recess can be used for positioning a component having a heat exchange channel, facilitating mounting. With a side surface of the accommodation recess, an area for connection to the component having a heat exchange channel can be increased, enhancing connection reliability.

In some embodiments, the bottom surface of the accommodation recess includes an annular portion, where the annular portion is located on a peripheral side of the concave cavity.

The annular portion is arranged on the peripheral side of the concave cavity. This can further increase an interaction area for a component communicating with the concave cavity, facilitating positioning and mounting of the component.

In some embodiments, the plurality of concave cavities include a first concave cavity and a second concave cavity. The fluid collector includes a first joint, where the first joint is connected to the housing. The fluid collector is provided with a first channel for communication between the first joint and the first concave cavity.

Compared with a solution of direct communication between the first joint and the first concave cavity, the arrangement method of using the first channel for communication between the first joint and the first concave cavity can simplify a design of a shape of the first joint, as long as the housing is provided with the first channel for communication between the two. This provides convenience for arrangement of the first joint and the first concave cavity.

In some embodiments, the housing and the first joint are integrated.

Manufacturing the housing and the first joint into an entirety can significantly enhance structural strength of a junction therebetween, thereby improving durability of the fluid collector. Additionally, the integration provides high airtightness at a junction between the housing and the first joint, reducing a volume of leaked heat exchange fluid, thereby enhancing the heat exchange effect, and reducing the risk of thermal runaway in the battery.

In some embodiments, the fluid collector further includes a second joint. The first joint and the second joint are separately mounted on two sides of the housing, and the second joint communicates with the first joint.

The second joint is configured to export the heat exchange fluid in the first joint to an adjacent fluid collector, allowing the heat exchange fluid to circulate among a plurality of fluid collectors, thereby facilitating heat exchange for a plurality of battery cells.

In some embodiments, the housing is provided with a positioning portion, and the positioning portion is configured to cooperate with an external reference component.

The positioning portion is disposed on the housing, and the positioning portion cooperates with the external reference component, to position or even fix the fluid collector, thereby facilitating assembly of a plurality of fluid collectors.

According to a second aspect, an embodiment of this application provides a thermal management assembly including a heat exchange plate and the fluid collector according to any embodiment of the first aspect. The heat exchange plate is provided with a plurality of heat exchange channels. The housing is connected to an end of the heat exchange plate and seals the plurality of heat exchange channels, and each of the concave cavities communicates with at least one of the heat exchange channels.

In some embodiments, the heat exchange plate includes a plate body and a plurality of partition portions disposed in the plate body. The plurality of partition portions are configured to partition the plate body into the plurality of heat exchange channels.

The plurality of partition portions partition the plate body into the plurality of heat exchange channels, so that the plurality of heat exchange channels are independent of each other, thereby reducing the risk of cross-flow of heat exchange fluid between adjacent heat exchange channels, to improve the heat exchange effect and reduce the risk of thermal runaway in a battery.

In some embodiments, the thermal management assembly further includes a baffle. The baffle is located between the heat exchange plate and the fluid collector, and the baffle is configured to separate part of the heat exchange channels from the fluid collecting chamber.

The baffle is configured to separate part of the heat exchange channels from the fluid collecting chamber. In other words, the fluid collecting chamber does not communicate with all the heat exchange channels directly opposite the fluid collecting chamber, but only communicate with part of the heat exchange channels. The heat exchange fluid does not circulate in part of the heat exchange channels in the heat exchange plate. This reduces a volume of the heat exchange fluid while a heat exchange requirement is met, reducing a weight of the battery.

In some embodiments, the baffle and the fluid collector are integrally formed; and/or the baffle and the heat exchange plate are integrally formed. Integrating the baffle with at least one of the fluid collector and the heat exchange plate simplifies subsequent processing steps, and the two components that are integrally formed exhibit high airtightness.

In some embodiments, the fluid collecting chamber includes an accommodation recess. The accommodation recess is recessed from one end of the housing facing the heat exchange plate. The plurality of concave cavities are recessed from a bottom surface of the accommodation recess towards a side facing away from the accommodation recess. The baffle is connected to the bottom surface of the accommodation recess.

Connecting the baffle to the bottom surface of the accommodation recess increases a contact area between the baffle and the fluid collector. The accommodation recess is used for positioning of the baffle, facilitating mounting. Further, the housing can protect the baffle.

In some embodiments, the baffle has a plurality of bypass holes, and the concave cavities communicate with the heat exchange channels through corresponding bypass holes.

The bypass holes are provided, so that the concave cavities and the heat exchange channels communicate with each other. The bypass holes allow a single baffle to replace a plurality obstruction plates, making mounting easier than in a manner of using a plurality obstruction plates for obstruction.

In some embodiments, the baffle is provided in a quantity of two. The two baffles are correspondingly disposed at two ends of the heat exchange channels, and bypass holes of the two baffles are in a one-to-one correspondence in an arrangement direction of the two baffles.

The two baffles are provided to seal the two ends of the heat exchange channels. Compared with a manner of sealing one end while leaving the other open, this design ensures that the heat exchange fluid keeps circulating around. This addresses the issue that the heat exchange fluid is retained in one sealed end of a heat exchange channel having a sealed end and an open end, thereby improving the heat exchange effect and reducing the risk of thermal runaway in the battery.

In some embodiments, the baffle includes a first surface and a second surface opposite each other. The first surface faces the heat exchange plate. The baffle includes a protrusion portion that protrudes from the first surface, and the protrusion portion cooperates with a side wall of the heat exchange channel in an insertion mating manner.

The protrusion portion is inserted into the side wall of the heat exchange channel, allowing for tighter engagement of the protrusion portion and the heat exchange plate, facilitating their connection and their subsequent connection to the fluid collector. Further, the protrusion portion is also used for positioning of the baffle during assembly to the heat exchange plate.

In some embodiments, the baffle includes a recess portion. The recess portion is recessed relative to the second surface, and the recess portion is disposed opposite the protrusion portion.

Setting the recess portion can reduce a weight of the baffle, increasing energy density of a battery.

According to a third aspect, an embodiment of this application provides a battery including a battery cell and the thermal management assembly according to any embodiment of the second aspect, where the thermal management assembly is configured to adjust a temperature of the battery cell.

In some embodiments, the thermal management assembly is provided in plurality. The plurality of thermal management assemblies are arranged sequentially, and the battery cell is disposed between adjacent thermal management assemblies. In this way, two sides of the thermal management assembly can exchange heat with the battery cell. Therefore, heat exchange efficiency is high, reducing the risk of thermal runaway in the battery.

In some embodiments, the battery further includes a connection pipe. The connection pipe is configured to enable communication between adjacent thermal management assemblies.

Adjacent thermal management assemblies are connected by the connection pipe, and therefore a distance between the adjacent thermal management assemblies may be adjusted by changing a length of the connection pipe, to adapt to battery cells in different sizes. This improves applicability of the thermal management assemblies.

According to a fourth aspect, an embodiment of this application provides an electric apparatus including the battery according to any embodiment of the third aspect, where the battery is configured to supply electrical energy.

### BRIEF DESCRIPTION OF DRAWINGS

To describe the technical solutions in the embodiments of this application more clearly, the following briefly describes the accompanying drawings required for describing the embodiments of this application. It is clear that the accompanying drawings in the following description show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a thermal management assembly and a battery cell according to some other embodiments of this application;
FIG. 4 is a schematic structural diagram of a fluid collector according to some embodiments of this application;
FIG. 5 is a front view of the fluid collector shown in FIG. 4;
FIG. 6 is a cross-sectional view of the fluid collector shown in FIG. 5 along A-A;
FIG. 7 is a schematic structural diagram of a fluid collector according to some other embodiments of this application;
FIG. 8 is a schematic structural diagram of a fluid collector according to still some other embodiments of this application;
FIG. 9 is a schematic structural diagram of a thermal management assembly according to some embodiments of this application;
FIG. 10 is a schematic structural diagram of a heat exchange plate of a thermal management assembly according to some embodiments of this application;
FIG. 11 is an enlarged view at a position B in FIG. 10;
FIG. 12 is a schematic diagram of a flow path of heat exchange fluid in a thermal management assembly according to some embodiments of this application;
FIG. 13 is a schematic structural exploded view of a thermal management assembly according to some embodiments of this application; and
FIG. 14 is a schematic structural diagram of a baffle of a thermal management assembly according to some embodiments of this application.

Reference signs in specific embodiments:
1. vehicle; 2. battery; 3. controller; 4. motor; 5. battery cell; 6. box; 61. first box portion; 62. second box portion; 63. accommodation space; 7. thermal management assembly; 71. heat exchange plate; 711. heat exchange channel; 712. plate body; 713. partition portion; 714. first side plate; 715. second side plate; 72. baffle; 721. bypass hole; 723. first surface; 724. second surface; 725. protrusion portion; 726. recess portion; 73. fluid collector; 74. housing; 741. fluid collecting chamber; 742. concave cavity; 743. accommodation recess; 744. annular portion; 745. first concave cavity; 746. second concave cavity; 747. first channel; 748. positioning through hole; 749. positioning notch; 740. bottom surface; 731. body portion; 732. cavity portion; 75. separation portion; 76. first joint; 77. second joint; and 8. connection pipe.

### DESCRIPTION OF EMBODIMENTS

To make the objectives, technical solutions, and advantages of embodiments of this application clearer, the following clearly describes the technical solutions in the embodiments of this application with reference to the accompanying drawings in the embodiments of this application. It is clear that the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe objectives of specific embodiments rather than to limit this application. The terms "include", "comprise", and any variations thereof in the specification and claims of this application as well as the foregoing description of the drawings are intended to cover non-exclusive inclusions. In the specification, claims, or accompanying drawings of this application, the terms "first", "second", and the like are intended to distinguish between different objects rather than to indicate a particular order or relative importance.

Reference to an "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, the terms may refer to a fixed connection, a detachable connection, or an integral connection, and may refer to a direct connection, an indirect connection via an intermediate medium, or internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between contextually associated objects.

In the embodiments of this application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

The battery cell in this application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes, which is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent fluid or other foreign matter from affecting charging or discharging of the battery cell.

The battery cell includes an electrode assembly and an electrolyte. The electrode assembly includes a positive electrode plate, a negative electrode plate, and a separator. Operation of the battery cell mainly relies on migration of metal ions between the positive electrode plate and the negative electrode plate. The positive electrode plate includes a positive electrode current collector and a positive electrode active material layer. The positive electrode active material layer is applied on a surface of the positive electrode current collector. The positive electrode current collector includes a positive electrode coating area and a positive tab connected to the positive electrode coating area. The positive electrode coating area is coated with the positive electrode active material layer, and the positive tab is coated with no positive electrode active material layer. A lithium-ion battery cell is used as an example. The positive electrode current collector may be made of aluminum. The positive electrode active material layer includes a positive electrode active material, and the positive electrode active material may be lithium cobalt oxide, lithium iron phosphate, ternary lithium, lithium manganese oxide, or the like. The negative electrode plate includes a negative electrode current collector and a negative electrode active material layer. The negative electrode active material layer is applied on a surface of the negative electrode current collector. The negative electrode current collector includes a negative electrode coating area and a negative tab connected to the negative electrode coating area. The negative electrode coating area is coated with the negative electrode active material layer, and the negative tab is coated with no negative electrode active material layer. The negative electrode current collector may be made of copper, and the negative electrode active material layer includes a negative electrode active material, and the negative electrode active material may be carbon, silicon, or the like. A material of the separator may be PP (polypropylene, polypropylene), PE (polyethylene, polyethylene), or the like.

The battery cell further includes an enclosure. An accommodation cavity configured to accommodate the electrode assembly is formed in the enclosure. The enclosure provides external protection for the electrode assembly, preventing an external contaminant from affecting charge or discharge of the electrode assembly.

The battery exhibits different electrical cycling performance at varying environmental temperatures. An excessively high or low environmental temperature can lead to cycling performance decline of the battery, and even shorten a service life of the battery. To ensure safety, stable performance, and optimal operation of electric vehicles, effective thermal management of batteries is necessary to ensure that the batteries always operate within an appropriate temperature range.

The applicant has provided a thermal management assembly within a battery. The thermal management assembly is configured for heat exchange with a battery cell of the battery, to implement effective thermal management on the battery, ensuring that the battery cell operates within an appropriate temperature range.

The thermal management assembly includes a heat exchange plate and a fluid collector. The heat exchange plate has a plurality of heat exchange channels. The fluid collector is mounted at an end of the heat exchange plate, sealing off the plurality of heat exchange channels. Heat exchange fluid enters the heat exchange channels through a cavity inside the fluid collector, thereby facilitating heat exchange with the battery cell and reducing the risk of thermal runaway in the battery.

The fluid collector has a cavity. The heat exchange fluid simultaneously enters the plurality of heat exchange channels through the cavity, then reaches the other ends of the heat exchange channels, and is exported through a fluid collector at the other end. The plurality of heat exchange channels independently transfer the heat exchange fluid, in other words, are connected in parallel.

The inventors have found that using the plurality of heat exchange channels connected in parallel to transfer the heat exchange fluid can cause a large temperature difference of the heat exchange fluid between the two ends of the heat exchange channels, leading to non-uniform heating of the battery cell and poor heat exchange effect. For example, when the heat exchange fluid is used to cool the battery cell, the heat exchange fluid entering a first end of the heat exchange channel through the cavity of the fluid collector is at a low temperature. As the heat exchange fluid flows through the heat exchange channel to a second end, a temperature of the heat exchange fluid rises, resulting in non-uniform heat exchange at the two ends of the heat exchange channel of the battery cell and poor cooling effect at the second end. The first end and the second end refer to the two opposite ends of the heat exchange channel.

In view of this, this application provides a fluid collector that is applied to a thermal management assembly of a battery and includes a housing and a separation portion. The housing has a fluid collecting chamber, where the fluid collecting chamber is configured to be connected to a plurality of heat exchange channels in the thermal management assembly. The separation portion is disposed in the fluid collecting chamber. The fluid collecting chamber includes a plurality of concave cavities. The separation portion separates the plurality of concave cavities. Each of the concave cavities is configured to communicate with at least one of the heat exchange channels. In this application, the separation portion is disposed in the housing of the fluid collector, dividing the fluid collecting chamber of the housing into a plurality of concave cavities. Each of the concave cavities communicates with the heat exchange channel. In this way, the plurality of heat exchange channels can be connected in series through the concave cavities. The manner of series connection improves uniformity of heat exchange, thereby addressing the issue of non-uniform heat exchange of the battery cell, improving the heat exchange effect of the battery cell, and reducing the risk of thermal runaway in the battery cell.

The battery cell described in embodiments of this application is applicable to a battery and an electric apparatus using the battery cell.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, an example in which the electric apparatus is a vehicle is used for description of the following embodiments.

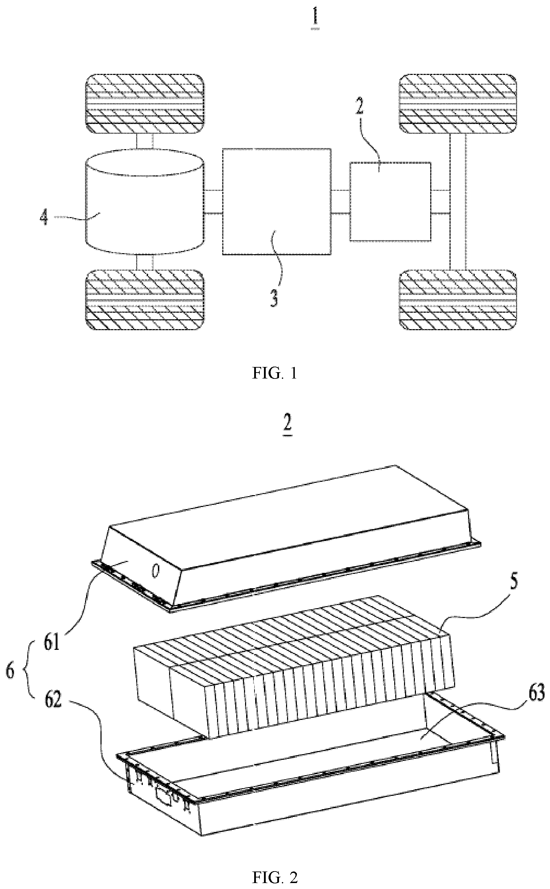

FIG. 1 is a schematic structural diagram of a vehicle according to some embodiments of this application.

As shown in FIG. 1, a vehicle 1 is provided with a battery 2 inside, and the battery 2 may be disposed at the bottom, front, or rear of the vehicle 1. The battery 2 may be configured to supply power to the vehicle 1. For example, the battery 2 may be used as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

There may be one or more battery cells in the battery 2. Under a condition that a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and an entirety formed by the plurality of battery cells is positioned to a bearing component. Certainly, the plurality of battery cells may first be connected in series, parallel, or series-parallel to constitute a battery module, and then a plurality of battery modules are connected in series, parallel, or series-parallel to constitute an entirety positioned to the bearing component.

FIG. 2 is a schematic exploded view of a battery according to some embodiments of this application.

As shown in FIG. 2, the battery 2 includes a box 6 and a battery cell 5, and the battery cell 5 is accommodated in the box 6.

The box 6 is configured to accommodate the battery cell 5, and the box 6 may have various structures. In some embodiments, the box 6 may include a first box portion 61 and a second box portion 62. The first box portion 61 and the second box portion 62 fit together. The first box portion 61 and the second box portion 62 jointly define an accommodation space 63 for accommodating the battery cell 5. The second box portion 62 may be a hollow structure with an opening formed at an end, the first box portion 61 is a plate-shaped structure, and the first box portion 61 is fitted with an opening side of the second box portion 62, to form the box 6 having the accommodation space 63. Alternatively, the first box portion 61 and the second box portion 62 may both be a hollow structure with an opening on one side, and an opening side of the first box portion 61 is fitted with an opening side of the second box portion 62, to form the box 6 having the accommodation space 63. Certainly, the first box portion 61 and the second box portion 62 may be in various shapes, such as cylinder and cuboid.

To improve airtightness between the first box portion 61 and the second box portion 62 after their connection, a sealing element such as sealing gum and sealing ring may also be disposed between the first box portion 61 and the second box portion 62.

It is assumed that the first box portion 61 fits on a top of the second box portion 62. In this case, the first box portion 61 may be referred to as an upper cover, and the second box portion 62 may be referred to as a lower box.

There may be one or more battery cells 5 in the battery 2. Under a condition that a plurality of battery cells 5 are provided, the plurality of battery cells 5 may be connected in series, parallel, or series-parallel, where being connected in series-parallel means a combination of series and parallel connections of the plurality of battery cells 5. The plurality of battery cells 5 may be directly connected in series, parallel, or series-parallel, and then an entirety of the plurality of the battery cells 5 is accommodated in the box 6. Certainly, the plurality of battery cells 5 may alternatively be connected in series, parallel, or series-parallel to first form a battery module, and then a plurality of battery modules are connected in series, parallel, or series-parallel to form an entirety accommodated in the box 6.

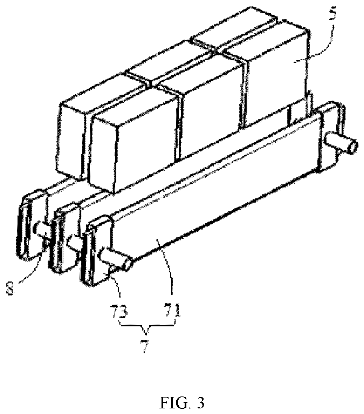

FIG. 3 is a schematic structural diagram of a thermal management assembly and a battery cell according to some other embodiments of this application.

As shown in FIG. 3, this application further provides a battery 2, including a battery cell 5 and a thermal management assembly 7, where the thermal management assembly 7 is configured to adjust a temperature of the battery cell 5.

In some embodiments, the thermal management assembly 7 is provided in plurality, and the plurality of thermal management assemblies 7 are arranged sequentially, and the battery cell 5 is disposed between adjacent thermal management assemblies 7.

A quantity of battery cells 5 between adjacent thermal management assemblies 7 is not limited in these embodiments of this application, meaning that there may be one or more battery cells 5.

The plurality of thermal management assemblies 7 are provided, and the battery cell 5 is provided in an interval between adjacent thermal management assemblies 7. In this way, two sides of the thermal management assembly 7 can exchange heat with the battery cell 5. Therefore, the heat exchange efficiency is high, reducing the risk of thermal runaway in the battery 2.

Optionally, two sides of the battery cell 5 respectively abut against two adjacent thermal management assemblies 7. In this way, the battery cell 5 has good heat exchange effect because two sides of the battery cell 5 can exchange heat.

In some embodiments, the battery further includes a connection pipe 8. The connection pipe 8 is configured to enable communication between adjacent thermal management assemblies 7.

A structural form of the connection pipe 8 is not limited in these embodiments of this application. The connection pipe 8 may be a single pipe or a plurality of pipes spliced together.

Adjacent thermal management assemblies 7 are connected by the connection pipe 8, and therefore a distance between the adjacent thermal management assemblies 7 may be adjusted by changing a length of the connection pipe 8, to adapt to battery cells 5 in different sizes. This improves applicability of the thermal management assemblies 7.

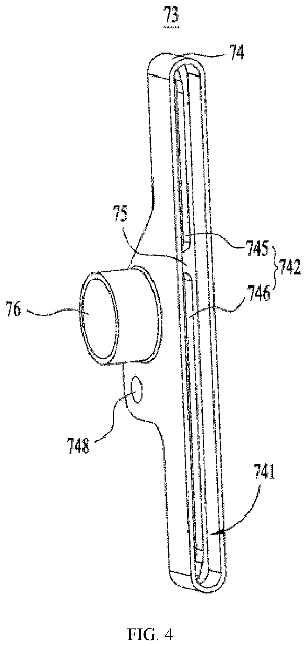

FIG. 4 is a schematic structural diagram of a fluid collector according to some embodiments of this application.

As shown in FIG. 4, these embodiments of this application provide a fluid collector 73 applied to the thermal management assembly 7 of the battery. The fluid collector 73 includes a housing 74 and a separation portion 75. The housing 74 has a fluid collecting chamber 741. The fluid collecting chamber 741 is configured to be connected to a plurality of heat exchange channels in the thermal management assembly 7. The separation portion 75 is disposed in the fluid collecting chamber 741. The fluid collecting chamber 741 includes the plurality of concave cavities 742. The separation portion 75 separates the plurality of concave cavities 742, and each of the concave cavities 742 is configured to communicate with at least one of the heat exchange channels.

Shapes of the plurality of concave cavities 742 in these embodiments of this application may be the same or different. Sizes of the plurality of concave cavities 742 may be the same or different.

In these embodiments of this application, the separation portion 75 completely separates the plurality of concave cavities 742, so that the plurality of concave cavities 742 are independent of each other and do not communicate with each other.

There may be two, three, or more concave cavities 742 in the fluid collector 73.

A manner of connecting the separation portion 75 and the housing 74 is not limited in these embodiments of this application. For example, the separation portion 75 and the housing 74 may be connected through welding, snap-fitting, bonding, or the like.

A shape of the separation portion 75 is not limited in these embodiments of this application, and may be a plate shape, block shape, or the like.

Optionally, the housing 74 is provided with a joint for introducing and/or exporting heat exchange fluid. To be specific, when the housing 74 can be provided with only one joint, the joint is configured to introduce the heat exchange fluid into the concave cavity 742 or export the heat exchange fluid from the concave cavity 742. When the housing 74 is provided with two joints, the two joints communicate with each other. One joint is configured to introduce the heat exchange fluid into the concave cavity 742, and the other joint is configured to introduce the heat exchange fluid into a joint of an adjacent fluid collector.

In these embodiments of this application, each concave cavity 742 communicates with at least one heat exchange channel, and the plurality of heat exchange channels can be connected in series because the plurality of concave cavities 742 are independent of each other. A shape of a channel formed by the plurality of heat exchange channels connected in series may be approximately a U shape, an S shape, an M shape, or the like.

Compared with using parallel connection for communication between the plurality of heat exchange channels, in the manner of using series connection for communication, a moving path of the heat exchange fluid is not oriented in a same direction, but the fluid travels back and forth at least once between two ends of the plurality of heat exchange channels. There is little difference in heat exchange effect of the heat exchange fluid on two sides of the plurality of heat exchange channels in the battery cell 5, allowing for the uniform heat exchange effect of the battery cell 5. For example, for a series flow channel approximately in a U shape formed by the plurality of heat exchange channels, when heat exchange fluid is used to cool the battery cell 5, the heat exchange fluid entering a first end of the heat exchange channel through the concave cavity 742 of the fluid collector 73 is at a low temperature. As the heat exchange fluid continuously performs heat exchange and reaches a second end, the temperature of the fluid rises. Then, the temperature of the fluid continues to rise when the heat exchange fluid returns to the first end. Therefore, average temperatures of the heat exchange fluid at the first end and the second end are not significantly different, resulting in similar heat exchange effect of the battery cell 5 at the first end and the second end, achieving heat exchange uniformity. Similarly, when the number of bends in the series flow channel increases, there is still little difference between the average temperatures of the heat exchange fluid at the first end and the second end, maintaining good heat exchange uniformity of the battery cell 5.

Therefore, the separation portion 75 is provided on the housing 74 to partition the fluid collecting chamber 741 into the plurality of concave cavities 742. The plurality of heat exchange channels are connected in series and communicate with each other through the plurality of concave cavities 742. This can alleviate non-uniform heating of the battery cell 5 caused by provision of a single cavity in a fluid collector, enhancing the heat exchange effect of the battery cell 5 and reducing the risk of thermal runaway in the battery cell 5.

In some embodiments, the housing 74 and the separation portion 75 form an integrated structure.

Integration in these embodiments of this application means that the housing 74 and the separation portion 75 are simultaneously formed as an entirety during production instead of being connected to each other in another subsequent connection process. For example, both are made of a same material and formed simultaneously.

The inventors have found that when the separation portion 75 is assembled into the housing 74, for example, when the separation portion 75 is connected to the housing 74 in a manner of bonding, snap-fitting, or the like, there may be a gap at a junction between the separation portion 75 and the housing 74, making it difficult to achieve sealing. Consequently, there is a risk of cross-flow between adjacent concave cavities 742. The cross-flow of the heat exchange fluid leads to non-uniform heat exchange effect, thereby affecting the heat exchange effect of the battery cell 5.

Therefore, the inventors have adopted an integrated structure formed by the housing 74 and the separation portion 75. The integration can not only significantly improve structural strength of a junction, but also significantly enhance airtightness of the junction between the separation portion 75 and the housing 74. This reduces the risk of cross-flow between adjacent concave cavities 742 and mitigates the temperature rise or fall of the heat exchange fluid caused by mixing of the heat exchange fluid, enhancing the heat exchange effect of the battery cell 5, and reducing the risk of thermal runaway in the battery 2.

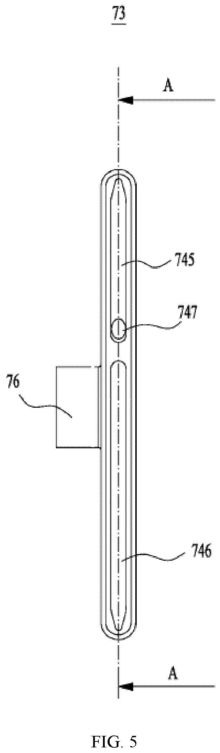

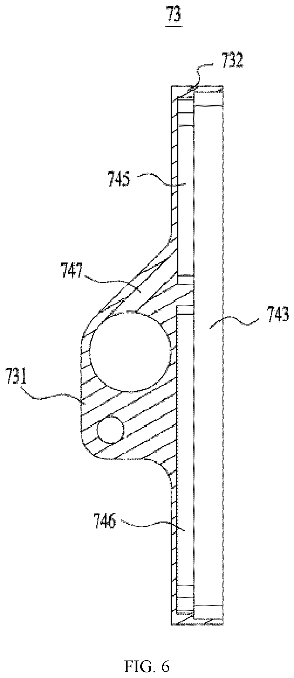

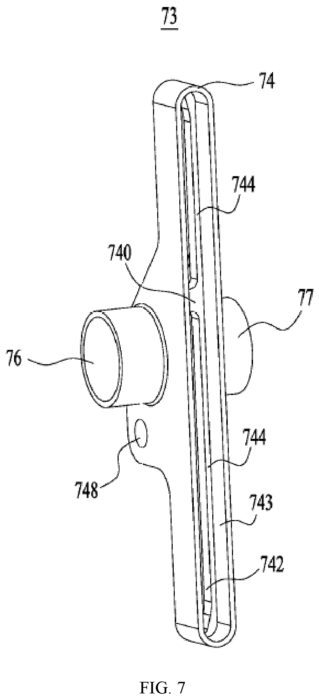

FIG. 5 is a front view of the fluid collector shown in FIG. 4. FIG. 6 is a cross-sectional view of the fluid collector shown in FIG. 5 along A-A. FIG. 7 is a schematic structural diagram of the fluid collector according to some other embodiments of this application.

As shown in FIG. 5 to FIG. 7, in some embodiments, the fluid collecting chamber 741 includes an accommodation recess 743. The accommodation recess 743 is recessed from one end of the housing 74 facing the heat exchange channel. The plurality of concave cavities 742 are recessed from a bottom surface 740 of the accommodation recess 743 towards a side facing away from the accommodation recess 743.

In these embodiments, the concave cavities 742 being recessed from the bottom surface 740 of the accommodation recess 743 means that the concave cavities 742 are recessed from the bottom surface 740 towards the side facing away from the accommodation recess 743. In other words, in the fluid collector 73, the bottom surface 740 exists on the accommodation recess 743, and the bottom surface 740 does not disappear due to the recess.

Optionally, the bottom surface 740 of the accommodation recess 743 is a flat surface.

The accommodation recess 743 is configured to accommodate an end of a heat exchange plate having a heat exchange channel, and the heat exchange plate abuts against the bottom surface 740 of the accommodation recess 743 directly or through another component, to achieve communication between the heat exchange channel and the concave cavity 742.

The bottom surface 740 of the accommodation recess 743 can be used for positioning a component having a heat exchange channel, facilitating mounting. With a side surface of the accommodation recess, an area for connection to the component having a heat exchange channel can be increased, enhancing connection reliability. To be specific, the fluid collector 73 cooperates with the heat exchange plate through the accommodation recess 743 in an insertion mating manner. Part of an outer surface of the heat exchange plate abuts against the side surface of the accommodation recess 743. This arrangement increases a contact area of the heat exchange plate and the housing 74, so that connection strength is enhanced during welding or bonding due to a larger contact area, increasing reliability of connection between the heat exchange plate and the fluid collector 73. Moreover, during insertion, the heat exchange plate is stopped due to obstruction of the bottom surface 740 of the accommodation recess 743. Therefore, the bottom surface 740 and the side surface of the accommodation recess 743 can be used for positioning during insertion of the heat exchange plate, facilitating mounting.

In some embodiments, the bottom surface 740 of the accommodation recess 743 includes an annular portion 744, where the annular portion 744 is located on a peripheral side of the concave cavity 742.

In these embodiments, the annular portion 744 refers to an annular surface enclosed by the bottom surface 740 of the accommodation recess 743.

A correspondence between the annular portion 744 and the concave cavity 742 is not limited in these embodiments, as long as the annular portion 744 is provided on a peripheral side of at least one concave cavity 742. Optionally, the annular portion 744 is in a one-to-one correspondence with the concave cavity 742.

An area for interaction between the bottom surface 740 and the heat exchange plate can be further increased by providing the annular portion 744 on the peripheral side of the concave cavity 742. When the heat exchange plate is connected to the bottom surface 740 directly or through another component, a large area for interaction between the bottom surface 740 and the heat exchange plate or the another component enhances positioning effect of the heat exchange plate, and facilitates mounting. Moreover, a larger area of the interaction surface indicates better effect of sealing the heat exchange fluid in the concave cavity 742, reducing the risk of fluid leakage.

In some embodiments, the plurality of concave cavities 742 include a first concave cavity 745 and a second concave cavity 746. The fluid collector 73 includes a first joint 76, where the first joint 76 is connected to the housing 74. The fluid collector 73 is provided with a first channel 747 for communication between the first joint 76 and the first concave cavity 745.

In these embodiments, the first joint 76 may be a tubular structure configured to introduce the heat exchange fluid into the first concave cavity 745, or export the heat exchange fluid from the first concave cavity 745.

Optionally, arrangement directions of the first concave cavity 745 and the second concave cavity 746 are parallel to an arrangement direction of the plurality of heat exchange channels.

Optionally, both the first concave cavity 745 and the second concave cavity 746 are strip-shaped concave cavities. A length relationship between the first concave cavity 745 and the second concave cavity 746 is not limited in these embodiments of this application. A length of the first concave cavity 745 may be greater than, less than, or equal to a length of the second concave cavity 746. For example, when the series flow channel is approximately in an S shape, a length of the first concave cavity 745 of the fluid collector 73 is less than a length of the second concave cavity 746.

A shape of the first channel 747 is not limited in these embodiments. The first channel 747 may be a single channel or may be formed by a plurality of channels that communicate with each other.

A shape of an opening of the first channel 747 facing the first concave cavity 745 is not limited in these embodiments of this application. The opening may be circular, rectangular, elliptical, or the like.

Compared with a solution of direct communication between the first joint 76 and the first concave cavity 745, the arrangement method of using the first channel 747 for communication between the first joint 76 and the first concave cavity 745 can simplify a design of a shape of the first joint 76, as long as the housing 74 is provided with the first channel 747 for communication between the two. This provides convenience for arrangement of the first joint 76 and the first concave cavity 745.

Optionally, the opening of the first channel 747 is provided on the bottom surface 740 of the first concave cavity 745. This arrangement facilitates the mounting of the first channel 747 without increasing a volume of the housing 74.

Optionally, a cross-sectional area of the first channel 747, measured perpendicular to a length direction of the first channel 747, is less than a cross-sectional area of the first joint 76 measured perpendicular to a length direction of the first joint 76.

In some embodiments, the housing 74 and the first joint 76 are integrated.

In these embodiments, the integration means that the housing 74 and the separation portion 75 are simultaneously processed and formed as an entirety during production instead of being connected to each other in another subsequent connection process. For example, both are made of a same material and formed simultaneously.

Manufacturing the housing 74 and the first joint 76 into an entirety can significantly enhance structural strength of a junction therebetween, thereby improving durability of the fluid collector 73. Additionally, the integration provides high airtightness at a junction between the housing 74 and the first joint 76, reducing a volume of leaked heat exchange fluid, thereby enhancing the heat exchange effect, and reducing the risk of thermal runaway in the battery 2.

Optionally, the housing 74 includes a body portion 731 and a cavity portion 732. The fluid collecting chamber 741 is formed in the cavity portion 732. The body portion 731 is located on a side of the cavity portion 732 facing away from an opening of the fluid collecting chamber 741, and the first joint 76 is placed on the body portion 731. Further optionally, the body portion 731 is connected to the middle of the cavity portion 732.

In some embodiments, the fluid collector 73 further includes a second joint 77. The first joint 76 and the second joint 77 are separately mounted on two sides of the housing 74, and the second joint 77 communicates with the first joint 76.

Whether shapes of the second joint 77 and the first joint 76 are the same is not limited in these embodiments of this application. For example, for ease of manufacture, the shapes of the first joint 76 and the second joint 77 are the same.

The first joint 76 and the second joint 77 may directly communicate with each other, that is, abut against each other; or a channel is disposed between the first joint 76 and the second joint 77 in the housing 74 for communication.

The second joint 77 and the first joint 76 are both disposed on the body portion 731.

The second joint 77 is configured to export the heat exchange fluid in the first joint 76 to an adjacent fluid collector 73, allowing the heat exchange fluid to circulate among a plurality of fluid collectors 73, thereby facilitating heat exchange for a plurality of battery cells 5.

The connection pipe 8 is configured to enable communication between adjacent fluid collectors 73 on a same side of the heat exchange plate. To be specific, the connection pipe 8 communicates with a first joint 76 of one fluid collector 73 and a second joint 77 of the other fluid collector 73 in two adjacent fluid collectors 73.

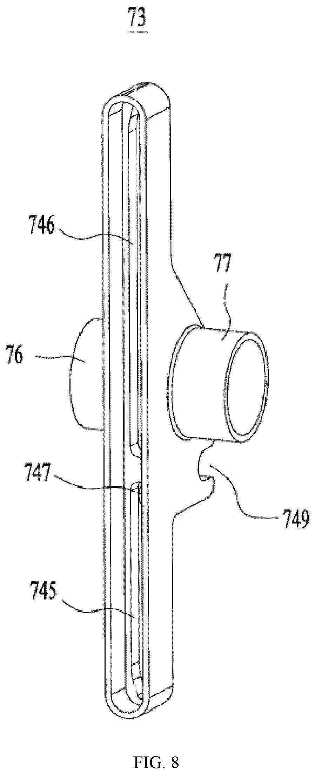

FIG. 8 is a schematic structural diagram of a fluid collector according to still some other embodiments of this application.

As shown in FIG. 8, in some embodiments, the housing 74 is provided with a positioning portion. The positioning portion is configured to cooperate with an external reference component.

A specific shape of the positioning portion in these embodiments of this application is not limited, for example, may be a positioning through hole 748, a positioning notch 749, or a profiled surface. The profiled surface may be a right-angle surface, an arc surface, or the like, and can cooperate with the external reference component for positioning.

A structure of the reference component in these embodiments of this application is not restricted, and the reference component is configured to cooperate with the positioning portion, to position at least one fluid collector. For example, when the positioning portion is the positioning through hole 748, the reference component includes a positioning pin matching the positioning through hole 748; or when the positioning portion is the profiled surface, the reference component includes a positioning surface matching a shape of the profiled surface. For example, when the profiled surface is the right-angle surface, the positioning surface is also a right-angle surface.

Optionally, the positioning through hole 748 and the positioning notch 749 are disposed on the body portion 731.

A shape of the positioning through hole 748 in these embodiments of this application is not limited. For example, the shape of the positioning through hole 748 may be circular, elliptical, square, or the like. Similarly, a shape of the positioning notch 749 is not limited in these embodiments of this application. For example, the shape of the positioning notch 749 may be a U shape, a semicircle, or the like.

The positioning portion is disposed on the housing 74, and the positioning portion cooperates with the external reference component, to position or even fix the fluid collector, thereby facilitating assembly of a plurality of fluid collectors.

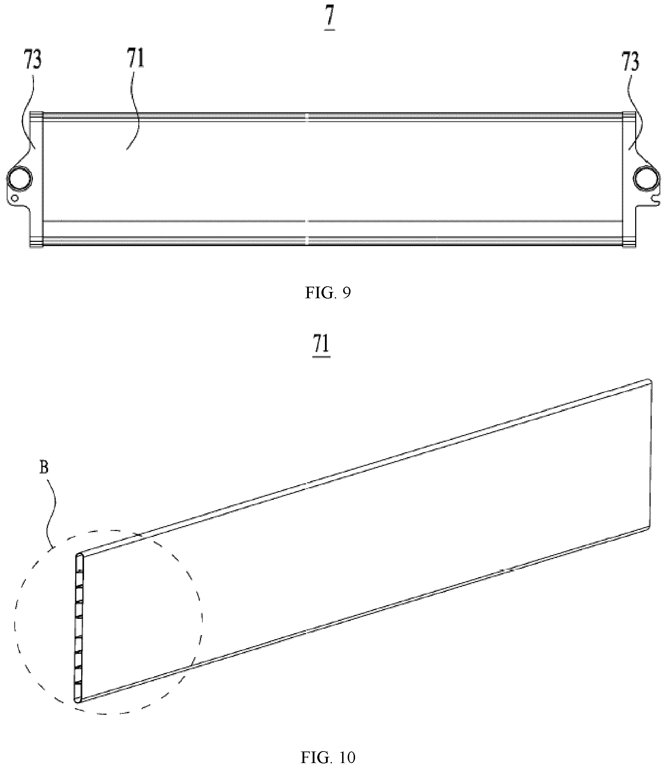

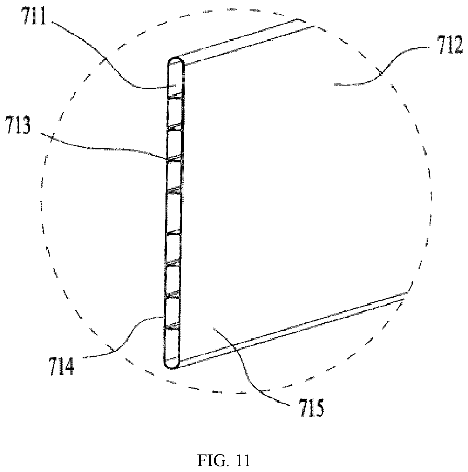

FIG. 9 is a schematic structural diagram of a thermal management assembly according to some embodiments of this application. FIG. 10 is a schematic structural diagram of a heat exchange plate of a thermal management assembly according to some embodiments of this application. FIG. 11 is an enlarged view at a point B in FIG. 10.

As shown in FIG. 9 to FIG. 11, these embodiments of this application further provide a thermal management assembly 7, including a heat exchange plate 71 and the fluid collector 73 according to any one of the foregoing embodiments. The heat exchange plate 71 is provided with a plurality of heat exchange channels 711. The housing 74 is connected to an end of the heat exchange plate 71 and seals the plurality of heat exchange channels 711. Each of the concave cavities 742 communicates with at least one of the heat exchange channels 711.

In these embodiments of this application, the plurality of heat exchange channels 711 of the heat exchange plate 71 are arranged side by side. Optionally, the plurality of heat exchange channels 711 may be parallel to each other.

A manner of connecting the housing 74 and the heat exchange plate 71 is not limited in these embodiments of this application. For example, the housing 74 and the heat exchange plate 71 may be connected through welding, bonding, or the like.

Whether the plurality of heat exchange channels 711 are in a same shape is not limited in these embodiments of this application. Shapes of the plurality of heat exchange channels 711 may be the same or different, or part of the heat exchange channels 711 are in a same shape while others are in different shapes.

In these embodiments of this application, the fluid collector 73 may be disposed at one end of the heat exchange plate 71, or fluid collectors 73 may be disposed at two ends of the heat exchange plate 71.

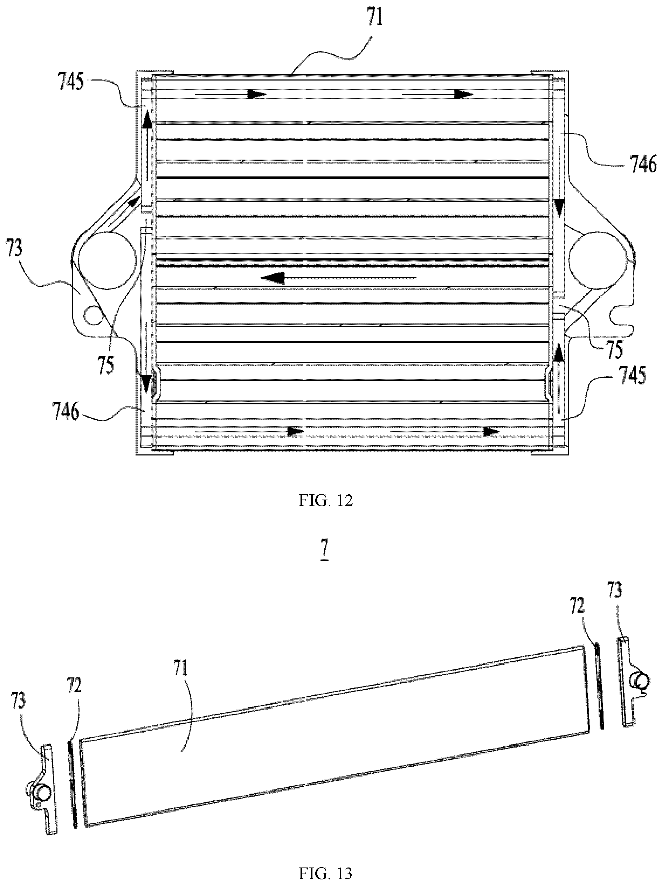

FIG. 12 is a schematic diagram of a flow path of heat exchange fluid in a thermal management assembly according to some embodiments of this application.

As shown in FIG. 12, in some optional embodiments, the fluid collectors 73 are disposed at the two ends of the heat exchange plate 71, and the concave cavities include a deflection cavity, where flow directions of the heat exchange fluid in two sets of heat exchange channels 711 that communicate with each other through the deflection cavity are opposite. Based on the foregoing embodiments, the second concave cavity 746 is the deflection cavity. In an arrangement direction of the two fluid collectors 73, a projection of the deflection cavity on the other fluid collector 73 covers one separation portion 75 of the other fluid collector 73. Each set of heat exchange channels 711 includes at least one heat exchange channel 711, and flow directions of heat exchange channels 711 in each set of heat exchange channels 711 are the same. Quantities of heat exchange channels 711 in all the sets of heat exchange channels 711 may be the same or different.

With this arrangement, the plurality of heat exchange channels 711 and the plurality of concave cavities 742 can easily form a series flow path without setting extension directions of all the heat exchange channels 711 to form the series flow path.

Optionally, two concave cavities 742 are provided in the fluid collector 73.

In some embodiments, the heat exchange plate 71 includes a plate body 712 and a plurality of partition portions 713 disposed in the plate body 712. The plurality of partition portions 713 are configured to partition the plate body 712 into the plurality of heat exchange channels 711.

A shape of the partition portion 713 is not limited in these embodiments of this application, and may be a plate shape, block shape, or the like. A manner of connecting the partition portions 713 and the plate body 712 is not limited in these embodiments of this application. For example, the partition portions 713 and the plate body 712 may be integrally formed or connected through welding or the like.

Optionally, the plate body 712 is provided with a mold cavity, the mold cavity penetrates two ends of the plate body 712, and the partition portions 713 are disposed in the mold cavity.

Whether the partition portions 713 are inclined relative to the plate body 712 is not limited in these embodiments of this application. To be specific, the partition portions 713 may be inclined to the plate body 712 or perpendicular to the plate body 712. When the partition portions 713 are inclined relative to the plate body 712, inclination angles of the partition portions 713 may be the same or different; or inclination angles of part of the partition portions 713 are the same while others may differ.

The plurality of partition portions 713 partition the plate body 712 into the plurality of heat exchange channels 711, so that the plurality of heat exchange channels 711 are independent of each other, thereby reducing the risk of cross-flow of the heat exchange fluid between adjacent heat exchange channels 711, to improve the heat exchange effect and reduce the risk of thermal runaway in the battery 2.

Optionally, the plate body 712 includes a first side plate 714 and a second side plate 715. The first side plate 714 and the second side plate 715 are opposite and parallel. The two ends of the partition portions 713 are correspondingly connected to the first side plate 714 and the second side plate 715, and are inclined relative to the first side plate 714 and the second side plate 715.

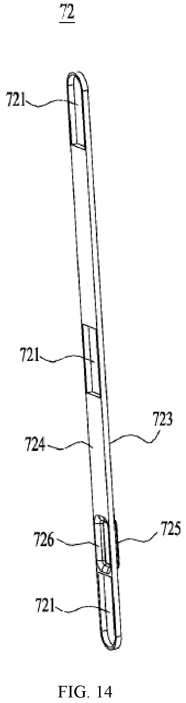

FIG. 13 is a schematic structural exploded view of a thermal management assembly according to some embodiments of this application. FIG. 14 is a schematic structural diagram of a baffle of a thermal management assembly according to some embodiments of this application.

As shown in FIG. 13 and FIG. 14, in some embodiments, the thermal management assembly 7 further includes a baffle 72. The baffle 72 is between the heat exchange plate 71 and the fluid collector 73. The baffle 72 is configured to separate part of the heat exchange channels 711 from the fluid collecting chamber 741.

A manner of connecting the baffle 72, the heat exchange plate 71, and the fluid collector 73 is not limited in these embodiments of this application. For example, the baffle 72, the heat exchange plate 71, and the fluid collector 73 may be connected through welding, bonding, or the like.

The baffle 72 is configured to separate part of the heat exchange channels 711 from the fluid collecting chamber 741. In other words, the fluid collecting chamber 741 does not communicate with all the heat exchange channels 711 directly opposite the fluid collecting chamber 741, but only communicate with part of the heat exchange channels 711. The heat exchange fluid does not circulate in part of the heat exchange channels 711 in the heat exchange plate 71. This reduces a volume of the heat exchange fluid while a heat exchange requirement is met, reducing a weight of the battery.

In these embodiments, for one fluid collector 73, the baffle 72 may block all concave cavities 742, so that each concave cavity 742 communicates with part of heat exchange channels 711 directly opposite the concave cavity 742. Certainly, the baffle 72 may alternatively block part of the concave cavities 742 in one fluid collector 73.

In some embodiments, the baffle 72 and the fluid collector 73 are integrally formed; and/or the baffle 72 and the heat exchange plate 71 are integrally formed.

Integration in these embodiments of this application means that two parts are simultaneously formed as an entirety during production instead of being connected to each other in another subsequent connection process. For example, both are made of a same material and formed simultaneously.

Integrating the baffle 72 with at least one of the fluid collector 73 and the heat exchange plate 71 simplifies subsequent processing steps, and the two components that are integrally formed exhibit high airtightness. For example, after the baffle 72 and the fluid collector 73 are integrally formed, only connection to the heat exchange plate 71 is required. In this case, a step of connection to the fluid collector 73 is omitted, and high airtightness is achieved, reducing a possibility of fluid leakage.

In some embodiments, the fluid collecting chamber 741 includes an accommodation recess 743. The accommodation recess 743 is recessed from one end of the housing 74 facing the heat exchange plate 71. The plurality of concave cavities 742 are recessed from a bottom surface 740 of the accommodation recess 743 towards a side facing away from the accommodation recess 743. The baffle 72 is connected to the bottom surface 740 of the accommodation recess 743.

Connecting the baffle 72 to the bottom surface 740 of the accommodation recess 743 increases a contact area between the baffle 72 and the fluid collector 73. The accommodation recess 743 is used for positioning of the baffle 72, facilitating mounting. Further, the housing 74 can protect the baffle 72.

Optionally, an end of the heat exchange plate 71 is inserted into the accommodation recess 743, and the end of the heat exchange plate 71 is connected to a side surface of the accommodation recess 743.

The heat exchange plate 71 is inserted into the accommodation recess 743, increasing a contact area between the heat exchange plate 71 and the accommodation recess 743. When welding or bonding is implemented for connection, the increase of the contact area enhances structural strength of the connection. Further, an outer surface of the end of the heat exchange plate 71 is connected to the side surface of the accommodation recess 743, reducing the risk of leakage of the heat exchange fluid between the heat exchange plate 71 and the side surface of the accommodation recess 743. Sealing of the heat exchange fluid is achieved.

In some embodiments, the baffle 72 has a plurality of bypass holes 721, and the concave cavities 742 communicate with the heat exchange channels 711 through corresponding bypass holes 721.

In these embodiments, a shape of the bypass hole 721 is not limited in these embodiments of this application. For example, the shape of the bypass hole 721 can match a shape of an opening of the heat exchange channel 711.

A quantity of bypass holes 721 corresponding to each concave cavity 742 is not limited in these embodiments of this application. For example, the deflection cavity communicates with at least two bypass holes 721, where one bypass hole 721 is configured to introduce the heat exchange fluid into the deflection cavity, and the other is configured to export the heat exchange fluid from the deflection cavity. A concave cavity 742 corresponding to an inlet of the series flow channel communicates with at least one bypass hole 721, and a concave cavity 742 corresponding to an outlet of the series flow channel communicates with at least one bypass hole 721.

Optionally, quantities of heat exchange channels 711 in all sections of the series flow channel are the same.

The bypass holes 721 are provided, so that the concave cavities 742 and the heat exchange channels 711 communicate with each other. The bypass holes 721 allow a single baffle 72 to replace a plurality obstruction plates, making mounting easier than in a manner of using a plurality obstruction plates for obstruction.

In some embodiments, the baffle 72 is provided in a quantity of two. The two baffles 72 are correspondingly disposed at the two ends of the heat exchange channels 711, and bypass holes 721 of the two baffles 72 are in a one-to-one correspondence in an arrangement direction of the two baffles 72.

In these embodiments, bypass holes 721 of the baffles 72 at two ends of the heat exchange channels 711 are disposed consistently, meaning both quantities and positions are the same to achieve one-to-one correspondence.

In these embodiments, the plurality of heat exchange channels 711 in the heat exchange plate 71 are connected in series, and each of the heat exchange channels 711 communicates with the concave cavities 742 on two sides through corresponding bypass holes 721 at the two ends.

The two baffles 72 are provided to seal the two ends of the heat exchange channels 711. Compared with a manner of sealing one end while leaving the other open, this design ensures that the heat exchange fluid keeps circulating around. This addresses the issue that the heat exchange fluid is retained in one sealed end of a heat exchange channel 711 having a sealed end and an open end, thereby improving the heat exchange effect and reducing the risk of thermal runaway in the battery 2.

In some embodiments, the baffle 72 includes a first surface 723 and a second surface 724 opposite each other. The first surface 723 faces the heat exchange plate 71. The baffle 72 includes a protrusion portion 725 that protrudes from the first surface 723, and the protrusion portion 725 cooperates with a side wall of the heat exchange channel 711 in an insertion mating manner.

In these embodiments, a shape and size of the protrusion portion 725 match a shape and size of the corresponding heat exchange channel 711 for tighter insertion mating.

The protrusion portion 725 is inserted into the side wall of the heat exchange channel 711, allowing for tighter engagement of the protrusion portion 725 and the heat exchange plate 71, facilitating their connection and their subsequent connection to the fluid collector 73. Further, the protrusion portion 725 is also used for positioning of the baffle 72 during assembly to the heat exchange plate 71.

In some embodiments, the baffle 72 includes a recess portion 726. The recess portion 726 is recessed relative to the second surface 724, and the recess portion 726 is disposed opposite the protrusion portion 725.

In these embodiments of this application, the recess portion 726 refers to a space that is recessed relative to the second surface 724.

Setting the recess portion 726 can reduce a weight of the baffle 72, increasing energy density of the battery.

In some embodiments of this application, this application further provides a battery 2, including a battery cell 5 and the thermal management assembly 7 according to any one of the foregoing embodiments. The thermal management assembly 7 is configured to adjust a temperature of the battery cell 5.

According to some embodiments of this application, this application further provides an electric apparatus, including the battery 2 according to any one of the foregoing embodiments. The battery 2 is configured to supply electrical energy.

Refer to FIG. 4 to FIG. 8. The embodiments of this application provide the fluid collector 73, applied to the thermal management assembly 7 of the battery. The fluid collector 73 includes the housing 74 and the separation portion 75. The housing 74 has the fluid collecting chamber 741. The fluid collecting chamber 741 is configured to be connected to the plurality of heat exchange channels in the thermal management assembly. The separation portion 75 is disposed in the fluid collecting chamber 741. The fluid collecting chamber 741 includes the plurality of concave cavities 742. The separation portion 75 separates the plurality of concave cavities 742, and each of the concave cavities 742 is configured to communicate with at least one of the heat exchange channels. The housing 74 and the separation portion 75 form an integrated structure. The fluid collecting chamber 741 includes the accommodation recess 743. The accommodation recess 743 is recessed from one end of the housing 74 facing the heat exchange channel. The plurality of concave cavities 742 are recessed from the bottom surface 740 of the accommodation recess 743. The bottom surface 740 of the accommodation recess 743 includes a plurality of annular portions 744, where the annular portions 744 are located on the peripheral side of the concave cavity 742.

The plurality of concave cavities 742 include the first concave cavity 745 and the second concave cavity 746. The fluid collector 73 includes the first joint 76, where the first joint 76 is connected to the housing 74. The fluid collector 73 is provided with the first channel 747 for communication between the first joint 76 and the first concave cavity 745. The fluid collector 73 further includes the second joint 77. The first joint 76 and the second joint 77 are separately mounted on the two sides of the housing 74, and the second joint 77 communicates with the first joint 76.

It should be noted that, without conflict, these embodiments and features in these embodiments of this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the scope of the invention as defined in the claims.

## Claims

1. A fluid collector (73), applied to a thermal management assembly (7) of a battery (2) and comprising:
a housing (74) having a fluid collecting chamber (741), wherein the fluid collecting chamber (741) is configured to be connected to a plurality of heat exchange channels (711) in the thermal management assembly (7); and
a separation portion (75) disposed in the fluid collecting chamber (741), wherein the fluid collecting chamber (741) comprises a plurality of concave cavities (742), the separation portion (75) separates the plurality of concave cavities (742), and each of the concave cavities (742) is configured to communicate with at least one of the heat exchange channels (711);
**characterized in that**
the housing (74) and the separation portion (75) form an integrated structure.

2. The fluid collector (73) according to claim 1, wherein the fluid collecting chamber (741) comprises an accommodation recess (743), and the accommodation recess (743) is recessed from one end of the housing (74) facing the heat exchange channel (711); and
the plurality of concave cavities (742) are recessed from a bottom surface (740) of the accommodation recess (743) towards a side facing away from the accommodation recess (743).

3. The fluid collector (73) according to claim 2, wherein the bottom surface (740) of the accommodation recess (743) comprises an annular portion (744), wherein the annular portion (744) is located on a peripheral side of the concave cavity (742).

4. The fluid collector (73) according to any one of claims 1 to 3, wherein the plurality of concave cavities (742) comprise a first concave cavity (745) and a second concave cavity (746); and
the fluid collector (73) comprises a first joint (76), wherein the first joint (76) is connected to the housing (74), and the fluid collector (73) is provided with a first channel (747) for communication between the first joint (76) and the first concave cavity (745).

5. The fluid collector (73) according to claim 4, wherein the housing (74) and the first joint (76) are integrated;
and/or
further comprising a second joint (77), wherein the first joint (76) and the second joint (77) are separately mounted on two sides of the housing (74), and the second joint (77) communicates with the first joint (76).

6. The fluid collector (73) according to any one of claims 1 to 5, wherein the housing (74) is provided with a positioning portion, and the positioning portion is configured to cooperate with an external reference component.

7. A thermal management assembly (7), comprising:
a heat exchange plate (71), provided with a plurality of heat exchange channels (711); and
the fluid collector (73) according to any one of claims 1 to 6, wherein the housing (74) is connected to an end of the heat exchange plate (71) and seals the plurality of heat exchange channels (711), and each of the concave cavities (742) communicates with at least one of the heat exchange channels (711).

8. The thermal management assembly (7) according to claim 7, wherein the heat exchange plate (71) comprises a plate body (712) and a plurality of partition portions (713) disposed in the plate body (712), and the plurality of partition portions (713) are configured to partition the plate body (712) into the plurality of heat exchange channels (711).

9. The thermal management assembly (7) according to claim 7 or 8, further comprising a baffle (72), wherein the baffle (72) is located between the heat exchange plate (71) and the fluid collector (73), and the baffle (72) is configured to separate part of the heat exchange channels (711) from the fluid collecting chamber (741); and preferably,
wherein the baffle (72) and the fluid collector (73) are integrally formed; and/or the baffle (72) and the heat exchange plate (71) are integrally formed;
or
wherein the fluid collecting chamber (741) comprises an accommodation recess (743), the accommodation recess (743) is recessed from one end of the housing (74) facing the heat exchange plate (71), and the plurality of concave cavities (742) are recessed from a bottom surface (740) of the accommodation recess (743) towards a side facing away from the accommodation recess (743); and
the baffle (72) is connected to the bottom surface (740) of the accommodation recess (743).

10. The thermal management assembly (7) according to claim 9, wherein the baffle (72) has a plurality of bypass holes (721), and the concave cavities (742) communicate with the heat exchange channels (711) through corresponding bypass holes (721);
preferably,
wherein the baffle (72) is provided in a quantity of two, the two baffles (72) are correspondingly disposed at two ends of the heat exchange channels (711), and bypass holes (721) of the two baffles (72) are in a one-to-one correspondence in an arrangement direction of the two baffles (72).

11. The thermal management assembly (7) according to claim 9 or 10, wherein the baffles (72) comprises a first surface (723) and a second surface (724) opposite each other, the first surface (723) faces the heat exchange plate (71), the baffle (72) comprises a protrusion portion (725) that protrudes from the first surface (723), and the protrusion portion (725) cooperates with a side wall of the heat exchange channel (711) in an insertion mating manner;
preferably,
wherein the baffle (72) comprises a recess portion (726), the recess portion (726) is recessed relative to the second surface (724), and the recess portion (726) is disposed opposite the protrusion portion (725).

12. A battery (2), **characterized by** comprising:
a battery cell (5); and
the thermal management assembly (7) according to any one of claims 7 to 11, wherein the thermal management assembly (7) is configured to adjust a temperature of the battery cell (5).

13. The battery (2) according to claim 12, wherein the thermal management assembly (7) is provided in plurality, the plurality of thermal management assemblies (7) are arranged sequentially, and the battery cell (5) is disposed between adjacent thermal management assemblies (7);
and/or
further comprising a connection pipe (8), wherein the connection pipe (8) is configured to enable communication between adjacent thermal management assemblies (7).

14. An electric apparatus, comprising the battery (2) according to claim 12 or 13, wherein the battery (2) is configured to supply electrical energy.

## Patentansprüche

1. Fluidkollektor (73), angewendet auf eine Wärmeverwaltungsanordnung (7) einer Batterie (2) und Folgendes umfassend:
ein Gehäuse (74), das eine Fluidsammelkammer (741) aufweist, wobei die Fluidsammelkammer (741) dazu ausgelegt ist, mit mehreren Wärmeaustauschkanälen (711) in der Wärmeverwaltungsanordnung (7) verbunden zu werden; und
einen Trennabschnitt (75), angeordnet in der Fluidsammelkammer (741), wobei die Fluidsammelkammer (741) mehrere konkave Hohlräume (742) umfasst, wobei der Trennabschnitt (75) die mehreren konkaven Hohlräume (742) trennt und wobei jeder der konkaven Hohlräume (742) ausgelegt ist zum Kommunizieren mit zumindest einem der Wärmeaustauschkanäle (711);
**dadurch gekennzeichnet, dass** das Gehäuse (74) und der Trennabschnitt (75) eine integrierte Struktur bilden.

2. Fluidkollektor (73) nach Anspruch 1, wobei die Fluidsammelkammer (741) eine Aufnahmevertiefung (743) umfasst und wobei die Aufnahmevertiefung (743) von einem Ende des Gehäuses (74), das dem Wärmeaustauschkanal (711) zugewandt ist, eingesenkt ist; und
wobei die mehreren konkaven Hohlräume (742) von einer unteren Oberfläche (740) der Aufnahmevertiefung (743) zu einer Seite, die von der Aufnahmevertiefung (743) abgewandt ist, eingesenkt sind.

3. Fluidkollektor (73) nach Anspruch 2, wobei die untere Oberfläche (740) der Aufnahmevertiefung (743) einen ringförmigen Abschnitt (744) umfasst, wobei sich der ringförmige Abschnitt (744) auf einer peripheren Seite des konkaven Hohlraums (742) befindet.

4. Fluidkollektor (73) nach einem der Ansprüche 1 bis 3, wobei die mehreren konkaven Hohlräume (742) einen ersten konkaven Hohlraum (745) und einen zweiten konkaven Hohlraum (746) umfassen; und
wobei der Fluidkollektor (73) eine erste Verbindung (76) umfasst, wobei die erste Verbindung (76) mit dem Gehäuse (74) verbunden ist und der Fluidkollektor (73) mit einem ersten Kanal (747) zur Kommunikation zwischen der ersten Verbindung (76) und dem ersten konkaven Hohlraum (745) versehen ist.

5. Fluidkollektor (73) nach Anspruch 4, wobei das Gehäuse (74) und die erste Verbindung (76) integriert sind;
und/oder
ferner umfassend eine zweite Verbindung (77), wobei die erste Verbindung (76) und die zweite Verbindung (77) separat auf zwei Seiten des Gehäuses (74) montiert sind und wobei die zweite Verbindung (77) mit der ersten Verbindung (76) kommuniziert.

6. Fluidkollektor (73) nach einem der Ansprüche 1 bis 5, wobei das Gehäuse (74) mit einem Positionierungsabschnitt versehen ist und wobei der Positionierungsabschnitt dazu ausgelegt ist, mit einer externen Referenzkomponente zusammenzuwirken.

7. Wärmeverwaltungsanordnung (7), die Folgendes umfasst:
eine Wärmeaustauschplatte (71), die mit mehreren Wärmeaustauschkanälen (711) versehen ist; und
den Fluidkollektor (73) nach einem der Ansprüche 1 bis 6, wobei das Gehäuse (74) mit einem Ende der Wärmeaustauschplatte (71) verbunden ist und die mehreren Wärmeaustauschkanäle (711) abdichtet, und wobei jeder der konkaven Hohlräume (742) mit zumindest einem der Wärmeaustauschkanäle (711) kommuniziert.

8. Wärmeverwaltungsanordnung (7) nach Anspruch 7, wobei die Wärmeaustauschplatte (71) einen Plattenkörper (712) und mehrere im Plattenkörper (712) angeordnete Partitionierungsabschnitte (713) umfasst, und wobei die mehreren Partitionierungsabschnitte (713) ausgelegt sind zum Partitionieren des Plattenkörpers (712) in die mehreren Wärmeaustauschkanäle (711).

9. Wärmeverwaltungsanordnung (7) nach Anspruch 7 oder 8, ferner umfassend ein Leitblech (72), wobei sich das Leitblech (72) zwischen der Wärmeaustauschplatte (71) und dem Fluidkollektor (73) befindet, und wobei das Leitblech (72) ausgelegt ist zum Trennen eines Teils der Wärmeaustauschkanäle (711) von der Fluidsammelkammer (741); und
vorzugsweise,
wobei das Leitblech (72) und der Fluidkollektor (73) integral ausgebildet sind; und/oder das Leitblech (72) und die Wärmeaustauschplatte (71) integral ausgebildet sind;
oder
wobei die Fluidsammelkammer (741) eine Aufnahmevertiefung (743) aufweist, die Aufnahmevertiefung (743) von einem Ende des Gehäuse (74), das der Wärmeaustauschplatte (71) zugewandt ist, eingesenkt sind, und die mehreren konkaven Hohlräume (742) von einer unteren Oberfläche (740) der Aufnahmevertiefung (743) zu einer Seite, die von der Aufnahmevertiefung (743) abgewandt ist, eingesenkt sind; und
wobei das Leitblech (72) mit der unteren Oberfläche (740) der Aufnahmevertiefung (743) verbunden ist.

10. Wärmeverwaltungsanordnung (7) nach Anspruch 9, wobei das Leitblech (72) mehrere Umgehungslöcher (721) aufweist und wobei die konkaven Hohlräume (742) über entsprechende Umgehungslöcher (721) mit den Wärmeaustauschkanälen (711) kommunizieren;
wobei vorzugsweise
das Leitblech (72) in einer Quantität von zwei bereitgestellt ist, wobei die zwei Leitbleche (72) entsprechend an zwei Enden der Wärmeaustauschkanäle (711) angeordnet sind, und wobei Umgehungslöcher (721) der zwei Leitbleche (72) in einer Eins-zu-Eins-Entsprechung in einer Anordnungsrichtung der zwei Leitbleche (72) sind.

11. Wärmeverwaltungsanordnung (7) nach Anspruch 9 oder 10, wobei die Leitbleche (72) eine erste Oberfläche (723) und eine zweite Oberfläche (724) umfassen, die einander gegenüberliegen, die erste Oberfläche (723) der Wärmeaustauschplatte (71) zugewandt ist, das Leitblech (72) einen Vorsprungsabschnitt (725) umfasst, der aus der ersten Oberfläche (723) herausragt, und der Vorsprungsabschnitt (725) mit einer Seitenwand des Wärmeaustauschkanals (711) in einer Einführungs-Verbindungsweise zusammenwirkt;
vorzugsweise,
wobei das Leitblech (72) einen Vertiefungsabschnitt (726) umfasst, der Vertiefungsabschnitt (726) relativ zur zweiten Oberfläche (724) eingesenkt ist und der Vertiefungsabschnitt (726) gegenüber dem Vorsprungsabschnitt (725) angeordnet ist.

12. Batterie (2), **dadurch gekennzeichnet, dass** sie Folgendes umfasst:
eine Batteriezelle (5); und
die Wärmeverwaltungsanordnung (7) nach einem der Ansprüche 7 bis 11, wobei die Wärmeverwaltungsanordnung (7) ausgelegt ist zum Anpassen einer Temperatur der Batteriezelle (5).

13. Batterie (2) nach Anspruch 12, wobei die Wärmeverwaltungsanordnung (7) in einer Mehrzahl bereitgestellt ist, wobei die mehreren Wärmeverwaltungsanordnungen (7) sequenziell angeordnet sind und wobei die Batteriezelle (5) zwischen angrenzenden Wärmeverwaltungsanordnungen (7) angeordnet ist;
und/oder
ferner umfassend ein Verbindungsrohr (8), wobei das Verbindungsrohr (8) dazu ausgelegt ist, Kommunikation zwischen angrenzenden Wärmeverwaltungsanordnungen (7) zu ermöglichen.

14. Elektrische Einrichtung, umfassend die Batterie (2) nach Anspruch 12 oder 13, wobei die Batterie (2) ausgelegt ist zum Zuführen elektrischer Energie.

## Revendications

1. Collecteur de fluide (73), appliqué à un ensemble de gestion thermique (7) d'une batterie (2) et comprenant :
un logement (74) ayant une chambre de collecte de fluide (741), la chambre de collecte de fluide (741) étant configurée pour être raccordée à une pluralité de canaux d'échange de chaleur (711) dans l'ensemble de gestion thermique (7) ; et
une portion de séparation (75) disposée dans la chambre de collecte de fluide (741), la chambre de collecte de fluide (741) comprenant une pluralité de cavités concaves (742), la portion de séparation (75) séparant la pluralité de cavités concaves (742), et chacune des cavités concaves (742) étant configurée pour communiquer avec au moins l'un des canaux d'échange de chaleur (711) ;;
**caractérisé en ce que** le logement (74) et la portion de séparation (75) forment une structure intégrée.

2. Collecteur de fluide (73) selon la revendication 1, dans lequel la chambre de collecte de fluide (741) comprend un évidement d'hébergement (743), et l'évidement d'hébergement (743) est en retrait par rapport à une extrémité du logement (74) faisant face au canal d'échange de chaleur (711) ; et
la pluralité de cavités concaves (742) sont en retrait par rapport à une surface inférieure (740) de l'évidement d'hébergement (743) vers un côté faisant face à l'écart de l'évidement d'hébergement (743).

3. Collecteur de fluide (73) selon la revendication 2, dans lequel la surface inférieure (740) de l'évidement d'hébergement (743) comprend une portion annulaire (744), la portion annulaire (744) étant située sur un côté périphérique de la cavité concave (742).

4. Collecteur de fluide (73) selon l'une quelconque des revendications 1 à 3, dans lequel la pluralité de cavités concaves (742) comprend une première cavité concave (745) et une seconde cavité concave (746) ; et
le collecteur de fluide (73) comprend un premier joint (76), le premier joint (76) étant raccordé au logement (74), et le collecteur de fluide (73) étant pourvu d'un premier canal (747) pour une communication entre le premier joint (76) et la première cavité concave (745).

5. Collecteur de fluide (73) selon la revendication 4, dans lequel le logement (74) et le premier joint (76) sont intégrés ;
et/ou
comprenant en outre un second joint (77), le premier joint (76) et le second joint (77) étant montés séparément sur deux côtés du logement (74), et le second joint (77) communiquant avec le premier joint (76).

6. Collecteur de fluide (73) selon l'une quelconque des revendications 1 à 5, dans lequel le logement (74) est pourvu d'une portion de positionnement, et la portion de positionnement est configurée pour coopérer avec un composant de référence externe.

7. Ensemble de gestion thermique (7), comprenant :
une plaque d'échange de chaleur (71), pourvue d'une pluralité de canaux d'échange de chaleur (711) ; et
le collecteur de fluide (73) selon l'une quelconque des revendications 1 à 6, dans lequel le logement (74) est raccordé à une extrémité de la plaque d'échange de chaleur (71) et scelle la pluralité de canaux d'échange de chaleur (711), et chacune des cavités concaves (742) communique avec au moins l'un des canaux d'échange de chaleur (711).

8. Ensemble de gestion thermique (7) selon la revendication 7, dans lequel la plaque d'échange de chaleur (71) comprend un corps de plaque (712) et une pluralité de portions de séparation (713) disposées dans le corps de plaque (712), et la pluralité de portions de séparation (713) sont configurées pour diviser le corps de plaque (712) en la pluralité de canaux d'échange de chaleur (711).

9. Ensemble de gestion thermique (7) selon la revendication 7 ou la revendication 8, comprenant en outre un déflecteur (72), le déflecteur (72) étant situé entre la plaque d'échange de chaleur (71) et le collecteur de fluide (73), et le déflecteur (72) étant configuré pour séparer une portion des canaux d'échange de chaleur (711) de la chambre de collecte de fluide (741) ; et de préférence,
dans lequel le déflecteur (72) et le collecteur de fluide (73) sont formés d'un seul tenant ; et/ou le déflecteur (72) et la plaque d'échange de chaleur (71) sont formés d'un seul tenant ;
ou
dans lequel la chambre de collecte de fluide (741) comprend un évidement d'hébergement (743), l'évidement d'hébergement (743) est en retrait par rapport à une extrémité du logement (74) faisant face à la plaque d'échange de chaleur (71), et la pluralité de cavités concaves (742) sont en retrait par rapport à une surface inférieure (740) de l'évidement d'hébergement (743) vers un côté faisant face à l'écart de l'évidement d'hébergement (743) ; et
le déflecteur (72) est raccordé à la surface inférieure (740) de l'évidement d'hébergement (743).

10. Ensemble de gestion thermique (7) selon la revendication 9, dans lequel le déflecteur (72) a une pluralité de trous de dérivation (721), et les cavités concaves (742) communiquent avec les canaux d'échange de chaleur (711) par le biais de trous de dérivation (721) correspondants ;
de préférence,
dans lequel le déflecteur (72) est prévu en une quantité de deux, les deux déflecteurs (72) sont disposés de manière correspondante au niveau de deux extrémités des canaux d'échange de chaleur (711), et des trous de dérivation (721) des deux déflecteurs (72) sont en correspondance biunivoque dans une direction d'agencement des deux déflecteurs (72).

11. Ensemble de gestion thermique (7) selon la revendication 9 ou la revendication 10, dans lequel les déflecteurs (72) comprennent une première surface (723) et une seconde surface (724) opposées l'une à l'autre, la première surface (723) fait face à la plaque d'échange de chaleur (71), le déflecteur (72) comprend une portion en saillie (725) qui fait saillie à partir de la première surface (723), et la portion en saillie (725) coopère avec une paroi latérale du canal d'échange de chaleur (711) d'une manière en appariement par insertion ;
de préférence,
dans lequel le déflecteur (72) comprend une portion d'évidement (726), la portion d'évidement (726) est évidée par rapport à la seconde surface (724), et la portion d'évidement (726) est disposée à l'opposé de la portion de saillie (725).

12. Batterie (2), **caractérisée en ce qu'**elle comprend :
un élément de batterie (5) ; et
l'ensemble de gestion thermique (7) selon l'une quelconque des revendications 7 à 11, l'ensemble de gestion thermique (7) étant configuré pour ajuster une température de l'élément de batterie (5).

13. Batterie (2) selon la revendication 12, dans laquelle l'ensemble de gestion thermique (7) est prévu en pluralité, la pluralité d'ensembles de gestion thermique (7) sont agencés séquentiellement, et l'élément de batterie (5) est disposé entre des ensembles de gestion thermique (7) adjacents ;
et/ou
comprenant en outre un tuyau de raccordement (8), le tuyau de raccordement (8) étant configuré pour permettre une communication entre des ensembles de gestion thermique (7) adjacents.

14. Appareil électrique, comprenant la batterie (2) selon la revendication 12 ou la revendication 13, dans lequel la batterie (2) est configurée pour fournir de l'énergie électrique.
